# EUROPÄISCHE PATENTSCHRIFT

(11) **EP 0 621 430 B1**
(45) Veröffentlichungstag und Bekanntmachung des Hinweises auf die Patenterteilung: **01.07.1998**
(21) Anmeldenummer: 94105938.8
(22) Anmeldetag: 16.04.1994
(51) Int. Cl.: F16L 29/04, F16L 39/00, F16L 37/18

(54) **Hydraulik-Steckkupplung**
Hydraulic coupling
Raccord hydraulique

(30) Priorität: 20.04.1993 DE 4312703; 12.11.1993 DE 4338665
(43) Veröffentlichungstag der Anmeldung: 26.10.1994
(73) Patentinhaber: VOSWINKEL KG, D-58540 Meinerzhagen-Neugrünenthal (DE)
(72) Erfinder: Momberg, Wolfgang F., D-42111 Wuppertal (DE); Wetzel, Jürgen, D-76532 Baden Baden (DE)
(74) Vertreter: Patentanwälte Dr. Solf & Zapf

(56) Entgegenhaltungen:
- EP-A- 0 037 351
- WO-A-90/08284
- DE-A- 2 920 399
- DE-B- 2 146 097
- GB-A- 783 266
- US-A- 3 640 552

## Beschreibung

Die vorliegende Erfindung betrifft eine Mehrfach-Kupplung mit mindestens zwei Hydraulik-Kupplungen, wobei jede Hydraulik-Kupplung aus einem geberseitigen Kupplungsteil und einem nehmerseitigen Kupplungsteil besteht, wobei die als Steckerventil und Muffenventil ausgebildeten, zum Kuppeln dichtend ineinandersteckbaren Kupplungsteile in einem entkuppelten Zustand selbsttätig schließen und sich beim Kuppeln gegenseitig öffnen, wobei einerseits zur Abdichtung jedes Kupplungsteils in seinem entkuppelten und geschlossenen Zustand sowie andererseits zur gegenseitigen Abdichtung der gekuppelten Kupplungsteile Umfangsdichtungen vorgesehen sind.

Eine solche Hydraulik-Mehrfach-Kupplung ist beispielsweise in der DE-A 42 22 193 beschrieben. Bei den Hydraulik-Kupplungen dieser bekannten Mehrfach-Kupplung handelt es sich um sogenannte Flachdichtkupplungen, die ein nahezu leckagefreies Kuppeln und Entkuppeln ermöglichen. Zur Abdichtung ist hier steckerseitig eine Umfangsdichtung in einer Innenringnut des Steckergehäuses angeordnet, so daß diese Dichtung im entkuppelten Zustand einen Stecker-Ventilkörper dichtend umschließt. Muffenseitig weist ein feststehender, stößelartiger, mit dem Stecker-Ventilkörper zusammenwirkender Ventilkörper in einer äußeren Ringnut eine Umfangsdichtung auf, die mit einer axialbeweglichen Innenhülse zum Öffnen und Schließen des durch die Kupplung führenden Strömungsweges zusammenwirkt.

Bei solchen Hydraulik-Kupplungen der gattungsgemäßen Art ist festgestellt worden, daß es in der Praxis des öfteren, manchmal schon nach einem einmaligen Kupplungsvorgang, zu Undichtigkeiten kommt. Derartige Undichtigkeiten können aber heute aufgrund der damit verbundenen Umweltbelastungen, insbesondere durch ins Grundwasser gelangendes Hydrauliköl, nicht mehr toleriert werden.

Der vorliegenden Erfindung liegt daher die Aufgabe zugrunde, die geschilderten Probleme zu beseitigen und hierzu eine Mehrfach-Kupplung der gattungsgemäßen Art zu schaffen, die bei konstruktiv einfacher und preiswerter Ausgestaltung unter allen Betriebsbedingungen auch nach langer Gebrauchszeit und praktisch beliebig vielen Kupplungsvorgängen noch eine gute Leckagefreiheit gewährleistet.

Erfindungsgemäß wird dies dadurch erreicht, daß zum Schutz der vorhandenen Umfangsdichtungen vor druckdifferenzbedingten Strömungen des Hydraulikmediums ein zumindest die nehmerseitigen Kupplungsteile in ihrem entkuppelten, geschlossenen Zustand oder zumindest kurzzeitig während des Kuppelns hydraulisch miteinander verbindendes und in ihrem gekuppelten Zustand voneinander trennendes Druckausgleichsventil vorgesehen ist.

Die Erfindung beruht auf der Erkenntnis, daß einerseits bei einem Kuppeln unter einseitigem, insbesondere nehmerseitigem Druck im Öffnungsmoment der Ventile durch dann vorhandene, noch sehr schmale Ringspalte derart starke, druckdifferenzbedingte Ausgleichsströmungen des Hydraulikmediums auftreten können, daß hierdurch, ggf. durch auftretende Kavitation, im Strömungsbereich liegende Umfangsdichtungen beschädigt, in einigen Fällen sogar ganz mitgerissen ("ausgespült" bzw. "ausgewaschen") werden können. Andererseits wurde erkannt, daß es auch bei ganz geöffneten Ventilen durch sehr hohe Strömungsgeschwindigkeiten zu derartigen Schäden im Bereich der Umfangsdichtungen kommen kann. Das betroffene Kupplungsteil wird in beiden Fällen unbrauchbar und muß ausgewechselt bzw. durch Ersatz der jeweiligen Umfangsdichtung(en) instand gesetzt werden. Hier wird nun durch die vorliegende Erfindung wirksame Abhilfe geschaffen, indem alle Umfangsdichtungen während des Öffnens der Kupplung vor druckdifferenzbedingten Strömungen, aber auch im geöffneten Zustand der Kupplung vor hohen (grundsätzlich auch druckdifferenzbedingten) Strömungsgeschwindigkeiten des Hydraulikmediums geschützt werden.

Erfindungsgemäß ist eine "hydraulische Lösung" des Problems vorgesehen, wozu erfindungsgemäß mindestens zwei Hydraulik-Kupplungen dadurch hydraulisch zusammenwirken, daß insbesondere die nehmerseitigen Kupplungsteile in ihrem entkuppelten, geschlossenen Zustand oder zumindest kurzzeitig während des Kuppelns über ein Druckausgleichsventil hydraulisch miteinander verbindbar sind, wobei das Druckausgleichsventil die Kupplungsteile dann jedenfalls in ihrem gekuppelten Zustand voneinander trennt, d.h. die Verbindung sperrt, wodurch dann die über die Kupplungen geführten Hydraulikleitungen wieder druckmäßig unabhängig voneinander sind. Bei dieser erfindungsgemäßen "hydraulischen Lösung" werden vor dem Kuppeln oder kurzzeitig während des Kuppelns durch einen Druckausgleich insbesondere zwischen den nehmerseitigen, teilweise unter Restdruck stehenden Kupplungsteilen auch Druckdifferenzen zwischen Nehmer- und Geberseite derart abgebaut oder zumindest reduziert, daß hierdurch im Öffnungsmoment der Ventile allenfalls noch geringfügige Ausgleichsströmungen auftreten können, die für die Umfangsdichtungen dann keine nennenswerte Gefahr mehr darstellen.

In einer vorteilhaften Ausführungsform der Erfindung ist zum Schutz der Umfangsdichtungen zusätzlich, d.h. in Kombination mit der erfindungsgemäßen "hydraulischen Lösung", eine "mechanische Lösung" vorgesehen, wie sie an sich aus der WO-A-90/08284 bekannt ist. Dabei wird mit mechanischen (konstruktiven) Mitteln erreicht, daß die Umfangsdichtungen (bei denen es sich üblicherweise um elastische Dichtringe handelt, die in umfänglichen, inneren bzw. äußeren Ringnuten sitzen) in jedem Zustand der Kupplungsteile, und zwar im entkuppelten und gekupptelten Zustand sowie auch während des Kuppelns, jeweils von der offenen Seite der jeweiligen Ringnut her abgedeckt und so vollständig gekammert sind. Es können hierdurch vorteilhafterweise nahezu beliebig starke Strömungen auftreten, ohne daß diesse die Umfangsdichtungen erreichen und gefährden könnten.

Vorteilhafte Weiterbildungen der Erfindung und konstruktive Einzelheiten der erfindungsgemäßen Hydraulik-Mehrfach-Kupplung sind in den Unteransprüchen sowie in der nachfolgenden Figurenbeschreibung enthalten.

Anhand der Zeichnung soll nun die Erfindung beispielhaft näher erläutert werden. Dabei zeigen
- Fig. 1: eine erfindungsgemäße Mehrfach-Kupplung mit vier Hydraulik-Kupplungen und mit bestimmten Zusatzkomponenten in einer Draufsicht von der Nehmerseite her,
- Fig. 2: einen Querschnitt durch die Mehrfach-Kupplung in der Schnittebene II-II gemäß Fig. 1, allerdings ohne Darstellung der Hydraulik-Kupplungen und Zusatzkomponenten,
- Fig. 3: eine Seitenansicht der Mehrfach-Kupplung in Blickrichtung des Pfeils III in Fig. 1,
- Fig. 4: eine vergrößerte Teil-Axialschnittdarstellung einer der Hydraulik-Kupplungen (Schnittebene IV-IV in Fig. 1) in einem entkuppelten Zustand der Kupplungsteile,
- Fig. 5: eine Darstellung wie in Fig. 4, jedoch während des Kuppel- bzw. Entkuppelvorganges,
- Fig. 6: eine Darstellung analog zu Fig. 4 und 5 im gekuppelten Zustand der Kupplungsteile,
- Fig. 7: einen vergrößerten Teil-Axialschnitt (Schnittebene VII-VII in Fig. 1) durch eine erste Ausführungsform eines erfindungsgemäßen Druckausgleichsventils in seinem geschlossenen Zustand bei gekuppelten Kupplungsteilen,
- Fig. 8: eine Ansicht des Druckausgleichsventils etwa analog zu Fig. 7, allerdings nochmals vergrößert und in seinem zum Druckausgleich geöffneten Zustand bei entkuppelten Kupplungsteilen,
- Fig. 9: einen Halbschnitt durch ein Druckausgleichsventil in einer zweiten Ausführungsform,
- Fig. 10: einen Schnitt durch eine dritte Ausführungsform eines Druckausgleichsventils,
- Fig. 11: eine Seitenansicht einer weiteren Ausführungsform einer erfindungsgemäßen Mehrfach-Kupplung,
- Fig. 12: eine Draufsicht in Pfeilrichtung XII gemäß Fig. 11,
- Fig. 13: eine Seitenansicht analog zu Fig. 11 einer weiteren Ausführung der Mehrfach-Kupplung und
- Fig. 14: eine Draufsicht analog zu Fig. 12 in Pfeilrichtung XIV gemäß Fig. 13.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugszeichen ebenfalls zu erkennen ist.

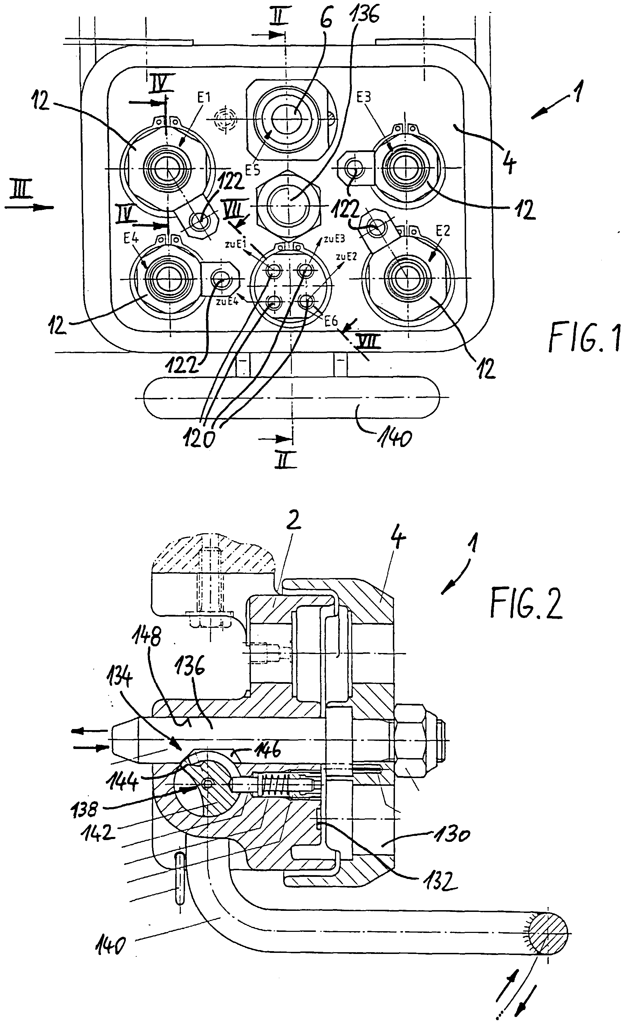

In den Fig. 1 bis 3 ist eine erfindungsgemäße Mehrfach-Kupplung 1 veranschaulicht, die aus zwei Kupplungsplatten 2, 4 und an diesen gehalterten Kupplungselementen besteht.

Bei den Kupplungselementen handelt es sich einerseits um mindestens zwei, im dargestellten Ausführungsbeispiel um vier, Hydraulik-Kupplungen E1, E2, E3, E4. Andererseits kann auch mindestens ein elektrisches, aus einem Stecker 6 und einer Buchse 8 bestehendes Kupplungselement E5 vorgesehen sein. Schließlich ist die Mehrfach-Kupplung 1 erfindungsgemäß auch mit einem Druckausgleichsventil E6 ausgestattet; hierauf wird im folgenden noch genauer eingegangen werden. Die Mehrfach-Kupplung 1 eignet sich zum schnellen, gleichzeitigen Anschlußverbinden mehrerer Hydraulik-Kupplungen und gegebenenfalls auch mindestens eines elektrischen Kupplungselementes, so daß die Mehrfach-Kupplung 1 insbesondere für den Anschluß von sogenannten Frontladern oder dergleichen hydraulisch betriebenen Anbaugeräten an Fahrzeugen geeignet ist. Dabei ist die erste Kupplungsplatte 2 mit den in Aufnahmeöffnungen gehalterten Kupplungsteilen auf der Seite des Fahrzeuges und damit einer Hydraulikpumpe ("Geberseite") angeordnet, und die zweite Kupplungsplatte 4 mit den in entsprechenden Aufnahmeöffnungen sitzenden Kupplungsteilen ist mit dem Anbaugerät bzw. Verbraucher ("Nehmerseite") verbunden.

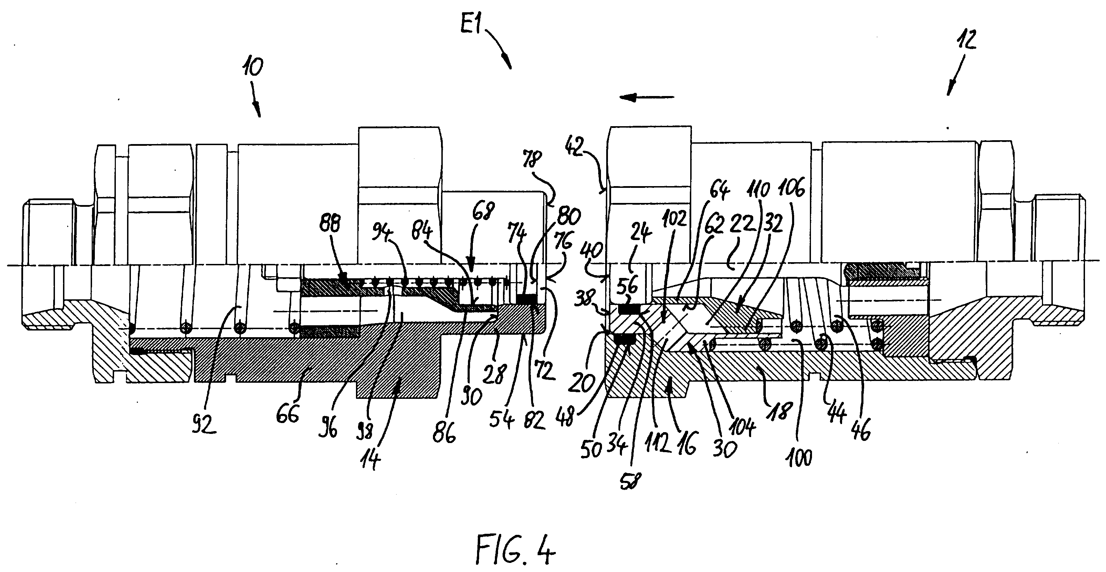

Es soll nun anhand der Fig. 4 bis 6 der Aufbau der Hydraulik-Kupplungen am Beispiel der Kupplung E1 erläutert werden.

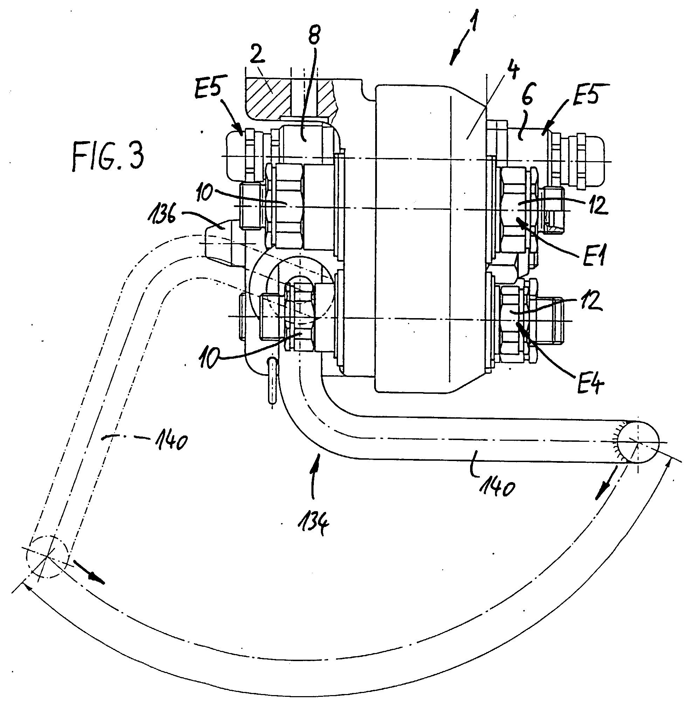

Die bzw. jede Hydraulik-Kupplung besteht aus einem geberseitigen Kupplungsteil 10 und einem nehmerseitigen Kupplungsteil 12, wobei im dargestellten Ausführungsbeispiel das geberseitige Kupplungsteil 10 als Stekkerventil 14 und das nehmerseitige Kupplungsteil 12 als Muffenventil 16 ausgebildet sind. Die Kupplungsteile 10, 12 sind in einem entkuppelten, voneinander getrennten Zustand selbsttätig federkraftbedingt und/oder druckbedingt geschlossen (Fig. 1) und zum Kuppeln dichtend ineinandersteckbar, wobei sie sich selbsttätig gegenseitig gegen die Federkraft und/oder den hydraulischen Druck öffnen (vgl. Fig. 2 und 3).

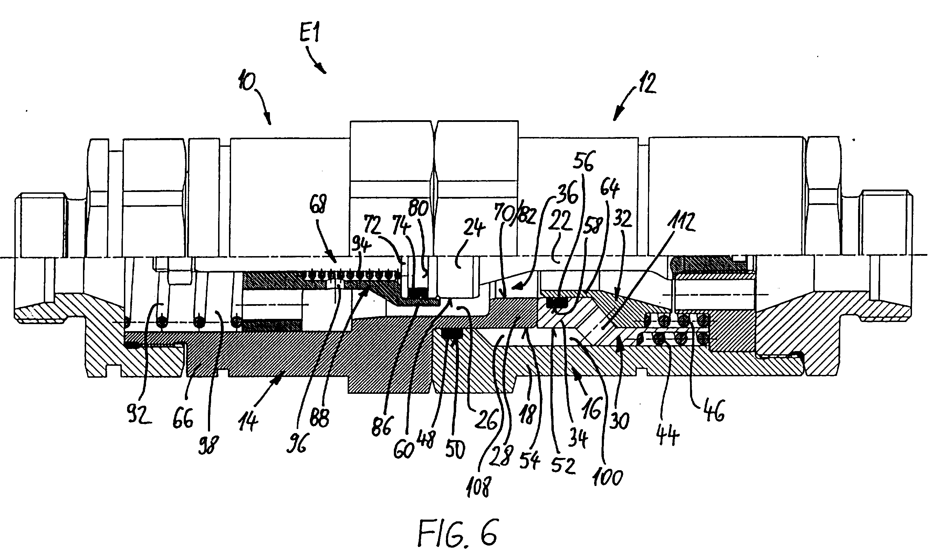

Das Muffenventil 16 besteht aus einem im wesentlichen zylindrischen Muffengehäuse 18 und einem in diesem ortsfest abgestützten und sich derart axial und zentrisch in Richtung einer einseitigen Gehäuseöffnung 20 erstreckenden Stößel 22, daß zwischen der Gehäuseöffnung 20 des Muffengehäuses 18 und einem in diesem Bereich angeordneten, verdickten und zylindrischen Kopf 24 des Stößels 22 eine ringförmige Einstecköffnung 26 (nur in Fig. 6 bezeichnet) für einen hohlzylindrischen Steckerschaft 28 des Steckerventils 14 gebildet ist. Dabei sind die ringförmigen Querschnitte der Einstecköffnung 26 und des Steckerschaftes 28 derart aneinander angepaßt, daß der Steckerschaft 28 mit geringem Spiel in die ringförmige Einstecköffnung 26 einsteckbar ist. Innerhalb des Muffengehäuses 18 sind einerseits eine axialverschiebbare, federbelastete Zwischenhülse 30 und andererseits eine axialverschiebbare, federbelastete Innenhülse 32 angeordnet. Die Zwischenhülse 30 ist im entkuppelten Zustand (Fig. 1) mit einem Ringabschnitt 34 zwischen dem Stößel-Kopf 24 und der Gehäuseöffnung 20 des Muffengehäuses 18 so angeordnet, daß hierdurch die Einstecköffnung 26 verschlossen wird. Beim Kuppeln wird durch Einstecken des Steckerschaftes 28 die Zwischenhülse 30 so in das Muffengehäuse 18 hinein verschoben, daß unter nachfolgender Mitnahme der Innenhülse 32 ein ringförmiger Strömungsdurchlaß 36 geöffnet wird (s. hierzu Fig. 6). Die Zwischenhülse 34 dient in an sich bekannter Weise dazu, Leckagen beim Kuppeln und Entkuppeln weitgehend zu vermeiden, wozu die Zwischenhülse 30 mit einer vorderen Stirnringfläche 38 (Fig. 4) im entkuppelten Zustand zumindest annähernd in einer Ebene mit einer vorderen Stirnfläche 40 des ortsfesten Stößels 22 bzw. dessen Kopfes 24 liegt. Hierbei liegt die Stößel-Stirnfläche 40 ihrerseits etwa in einer Ebene mit einer vorderen Stirnringfläche 42 des Muffengehäuses 18. Es handelt sich hierbei um das bekannte Prinzip einer "Flachdichtkupplung". Dabei ist es vorteilhaft, wenn die Stirnringfläche 38 und die Stirnfläche 40 geringfügig relativ zu der Gehäuse-Stirnringfläche 42 in das Gehäuse hinein versetzt sind (vgl. Fig. 4), da hierdurch eine bessere Zentrierung des Steckerventils 14 bei Beginn des Kuppelvorganges erreicht wird. Die Zwischenhülse 30 ist über eine sich am Muffengehäuse 18 abstützende Druckfeder 44 in Schließrichtung, d.h. in Richtung der Einstecköffnung 26, mit einer Federkraft beaufschlagt. Analog hierzu ist auch die Innenhülse 32 über eine sich am Muffengehäuse 18 abstützende Druckfeder 46 in der gleichen Richtung beaufschlagt.

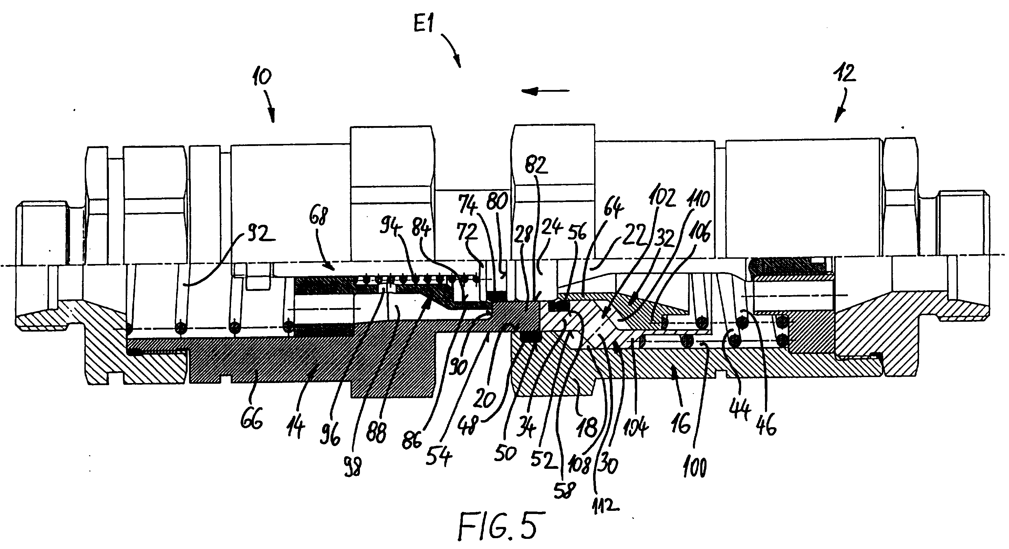

Bevorzugt weist nun das Muffenventil 16 eine erste Umfangsdichtung 48 in einer im Bereich der Einstecköffnung 26 angeordneten Innenringnut 50 des Muffengehäuses 18 auf. Diese erste Umfangsdichtung 48 ist vorzugsweise im entkuppelten Zustand von einer zylindrischen Außenfläche 52 des Ringabschnittes 34 der Zwischenhülse 30 sowie im gekuppelten Zustand von einer zylindrischen Außenfläche 54 des die Zwischenhülse 30 durch unmittelbare stirnseitige Anlage relativ zu der ersten Umfangsdichtung 48 verschiebenden Steckerschaftes 28 abgedeckt. Die als elastischer Dichtring ausgebildete Umfangsdichtung 48 wird somit während des Kuppelns - vgl. Fig. 5 - lediglich von einem geringfügigen Ringspalt zwischen dem Steckerschaft 28 und der Zwischenhülse 30 "überfahren". Die Umfangsdichtung 48 ist damit ständig, d.h. in allen Zuständen der Hydraulik-Kupplung, von der offenen Seite der Ringnut 50 her abgedeckt und so stets vollständig gekammert. Hierdurch wird sie in keinem Betriebszustand unmittelbar einer Hydraulikströmung ausgesetzt.

Das Muffenventil 16 besitzt ferner eine zweite, ebenfalls als elastischer Dichtring ausgebildete Umfangsdichtung 56 in einer Innenringnut 58 des die Einstecköffnung 26 verschließenden Ringabschnittes 34 der Zwischenhülse 30. Diese zweite Umfangsdichtung 56 wird vorzugsweise im entkuppelten Zustand von einer zylindrischen Außenfläche 60 des Stößel-Kopfes 24 sowie im gekuppelten Zustand von einer zylindrischen Außenfläche 62 eines sich axial in Richtung des Stößel-Kopfes 24 erstreckenden, ringförmigen bzw. hohlzylindrischen Abdeckabschnittes 64 der Innenhülse 32 abgedeckt. Dies läßt sich einerseits in Fig. 4 und andererseits in Fig. 6 gut erkennen. Gemäß Fig. 5 wird die zweite Umfangsdichtung 56 während des Kuppelns lediglich von einem geringfügigen Ringspalt zwischen dem Stößel-Kopf 24 und dem unmittelbar an diesem anliegenden Abdeckabschnitt 64 "überfahren", da die Durchmesser der Außenflächen 60 und 62 gleich sind. Beim Einschieben des Steckerschaftes 28 wird somit durch Verschieben der Zwischenhülse 30 die zweite Umfangsdichtung 56 von dem Stößel-Kopf 24 weggeschoben und dann unmittelbar von dem Abdeckabschnitt 64 "übernommen". Erst nach dieser Übernahme der Dichtung wird - bedingt durch eine entsprechende Auslegung der Federkräfte der Druckfedern 44, 46, wodurch sich immer erst die Zwischenhülse 30 gegen die Innenhülse 32 bewegt - durch weitergehende Verschiebung der Zwischenhülse 30 auch die Innenhülse 32 mitgenommen, so daß zwischen dieser und dem Stößel-Kopf 24 der oben bereits erwähnte, ringförmige Strömungsdurchlaß 36 gebildet wird (siehe Fig. 6). Somit ist vorteilhafterweise auch die zweite Umfangsdichtung 56 ständig abgedeckt (gekammert) und damit niemals einer direkten Hydraulikströmung ausgesetzt.

Das Steckerventil 14 besteht aus einem im wesentlichen hohlzylindrischen Steckergehäuse 66, in dem ein federbelasteter Ventilstößel 68 axialbeweglich geführt ist. Das Steckergehäuse 68 besitzt eine einseitige Öffnung 70 (siehe Fig. 6), wobei zum Verschließen dieser Öffnung 70 im entkuppelten Zustand der Ventilstößel 68 mit einem insbesondere zylindrischen Ventilkopf 72 von innen her in die Öffnung 70 eintritt und diese über eine Umfangsdichtung 74 dicht verschließt. Auch das Steckerventil 14 ist nach dem Prinzip einer "Flachdichtkupplung" ausgebildet,wozu der Ventilstößel 68 im entkuppelten, geschlossenen Zustand mit einer vorderen Stirnfläche 76 des Ventilkopfes 72 zumindest annähernd, insbesondere aber sehr genau in einer Ebene mit einer vorderen Stirnringfläche 78 des Steckerschaftes 28 liegt (Fig. 4).

Vorzugsweise ist die Umfangsdichtung 74 des Steckerventils 14 in einer Außenringnut 80 des zylindrisch und mit dem gleichen Außendurchmesser wie der Stößel-Kopf 24 des Muffenventils 16 ausgebildeten Ventilkopfes 72 angeordnet. Hierdurch ist die Umfangsdichtung 74 im entkuppelten Zustand (Fig. 4) von einer im Bereich der Öffnung 70 des Steckergehäuses 66 angeordneten, zylindrischen Innenfläche 82 des Steckerschaftes 28 sowie im gekuppelten Zustand (Fig. 6) von einer zylindrischen Innenfläche 84 eines Abdeckbereiches 86 einer den Ventilstößel 68 umschließenden, axialbeweglich geführten Schutzhülse 88 abgedeckt. Hierbei sind die Innendurchmesser der Öffnung 70 bzw. der zylindrischen Innenfläche 82 des Steckerschaftes 28 einerseits und des Abdeckbereiches 86 bzw. der Innenfläche 84 andererseits gleich ausgebildet. Der Abdeckbereich 86 liegt im entkuppelten Zustand (Fig. 4) unmittelbar stirnseitig an einer Ringstufe 90 an, über die sich ausgehend von der zylindrischen Innenfläche 82 des Steckerschaftes 28 das Steckergehäuse 66 innenseitig in radialer Richtung erweitert. Beim Kuppeln der Kupplungsteile 10, 12, d.h. beim Einstecken des Steckerschaftes 28 in die Einstecköffnung 26, wird durch stirnseitige Anlage an dem feststehenden Stößel 22 bzw. dem Stößel-Kopf 24 des Muffenventils 16 der bewegliche Ventilstößel 68 des Steckerventils 14 relativ zu dem Steckergehäuse 66 in dieses hinein verschoben, wodurch die Umfangsdichtung 74 von der Innenfläche 82 des Steckerschaftes 28 über einen schmalen Ringspalt in den Bereich der Innenfläche 84 des Abdeckbereiches 86 der Schutzhülse 88 gebracht wird und so von dieser "übernommen" wird. Erst danach öffnet das Ventil bei weitergehender Verschiebung des Ventilstößels 68, indem dieser dann die Schutzhülse 88 durch Anlage an dieser mitnimmt, so daß der Abdeckbereich 86 sich in axialer Richtung von der Ringstufe 90 abhebt und hier einen Strömungsdurchlaß freigibt (siehe Fig. 6). Somit ist vorteilhafterweise auch die Umfangsdichtung 74 des Steckerventils 14 ständig so abgedeckt, daß sie nicht direkt einer Hydraulikströmung ausgesetzt ist. Der Abdeckbereich 86 bildet folglich mit seiner vorderen Stirnringfläche bzw. -kante im Zusammenwirken mit der Ringstufe 90 eine zusätzliche "metallische Dichtung", die durch sich vergrößernden Ringspalt jedenfalls erst dann öffnet, nachdem die Umfangsdichtungen geschützt sind; der Differenzdruck baut sich folglich über diese "metallische Dichtung" ab (Spalt zwischen 86 und 90), was sich vorteilhaft auf die Standzeit der erfindungsgmäßen Kupplung auswirkt.

Durch die bevorzugte Ausgestaltung der Kupplungsteile 10, 12 tritt der zusätzliche Vorteil auf, daß jede Umfangsdichtung 48, 56, 74 in jedem Kupplungszustand innerhalb des "eigenen" Kupplungsteils 10 bzw. 12 verbleibt, d.h. keine der Umfangsdichtungen tritt beim Kuppeln in das jeweils andere Kupplungsteil ein. Dies ist vor allem bei der bevorzugten Anwendung zum Anschluß von Bau- oder Landmaschinen-Zusatzaggregaten ein wesentlicher Vorteil, weil dort die Kupplungsteile oftmals stark verschmutzt sind, so daß bei bekannten Kupplungen - beispielsweise auch bei der Kupplung gemäß der oben erwähnten DE-A-42 22 193 - beim Kuppeln von der jeweils die Trennebene zwischen den Kupplungsteilen "überfahrenden" Dichtung Schmutzpartikel mitgenommen werden, wodurch die Abdichtung beeinträchtigt wird. Dies wird durch die beschriebene bevorzugte Ausgestaltung vermieden, da keine Dichtung den eventuell stark verschmutzten Bereich der Trennebene "überfährt".

Im folgenden sollen noch einige Weiterbildungen und konstruktive Einzelheiten des Steckerventils 14 und des Muffenventils 16 erläutert werden.

Innerhalb des Steckerventils 14 sind vorzugsweise zwei Schließfedern angeordnet, und zwar ist zwischen der Schutzhülse 88 und dem Steckergehäuse 66 eine erste Schließfeder 92 und zwischen dem Ventilkopf 72 und der Schutzhülse 88 eine zweite Schließfeder 94 jeweils unter Vorspannung angeordnet. Zudem ist es vorteilhaft, wenn die Schutzhülse 88 insbesondere durch mindestens eine radiale Öffnung 96 druckausgeglichen ist. Die Öffnung 96 verbindet eine die zweite Schließfeder 94 aufnehmende Kammer zwischen Schutzhülse 88 und Ventilstößel 68 mit der Innenkammer 98 des Steckergehäuses 66. Durch diesen Druckausgleich wird vorteilhafterweise vermieden, daß die Schutzhülse 88 durch Differenzdrücke mit einer druckbedingten Verschiebekraft beaufschlagt wird.

Bezüglich des Muffenventils 16 ist es vorteilhaft, wenn das Muffengehäuse 18 im Anschluß an die Einstecköffnung 26 eine durchmessererweiterte Innenkammer 100 aufweist, wobei die Zwischenhülse 30 über einen insbesondere etwa konisch verlaufenden Übergangsabschnitt 102 in einen durchmessererweiterten, in der Innenkammer 100 verschiebbar geführten Führungsabschnitt 104 übergeht. Hierbei ist die Innenhülse 32 mit einem Führungsbereich 106 innerhalb des Führungsabschnittes 104 der Zwischenhülse 30 verschiebbar geführt. Hierbei ist es dann besonders zweckmäßig, wenn die Zwischenhülse 30 innerhalb des Muffengehäuses 18 druckausgeglichen ist, wozu insbesondere eine zwischen der Zwischenhülse 30 und dem Muffengehäuse 18 gebildete, volumenveränderliche Ringkammer 108 (siehe hierzu Fig. 5 und 6) mit einer zwischen der Zwischenhülse 30 und der Innenhülse 32 gebildeten, ebenfalls volumenveränderlichen Ringkammer 110 vorzugsweise über mindestens eine im Bereich des Übergangsabschnittes 102 angeordnete Durchgangsöffnung 112 verbunden ist. Durch diesen Druckausgleich wird auch ein druckbedingtes bzw. druckdifferenzbedingtes Verschieben der Zwischenhülse 30 und damit auch der Innenhülse 32 wirksam verhindert.

Zusätzlich oder alternativ zu dem bisher beschriebenen, mechanischen Schutz der Umfangsdichtungen ist nun erfindungsgemäß das oben bereits erwähnte Druckausgleichsventil E6 vorgesehen. Dieses Druckausgleichsventil E6 verbindet insbesondere die nehmerseitigen Kupplungsteile 12 von zumindest zwei Hydraulikkupplungen in deren entkuppeltem, geschlossenem Zustand ständig, oder aber zumindest kurzzeitig während des Kuppelns hydraulisch miteinander. Ferner trennt das Druckausgleichsventil E6 dann jedenfalls die Kupplungsteile 12 in ihrem gekuppelten Zustand voneinander ab, so daß dann die über die Hydraulik-Kupplungen geführten Hydraulikverbindungen wieder hydraulisch unabhängig voneinander sind.

Wie eingangs bereits erläutert wurde, wird durch diese erfindungsgemäße Lösung ein Abbau von Druckdifferenzen erreicht, wodurch sich auch druckdifferenzbedingte Ausgleichsströmungen im Kupplungsmoment auf ein hinsichtlich der Umfangsdichtungen unschädliches Maß reduzieren. Diese Lösung eignet sich daher sogar auch für herkömmliche Kupplungen, bei denen noch Dichtungen im Strömungsbereich liegen.

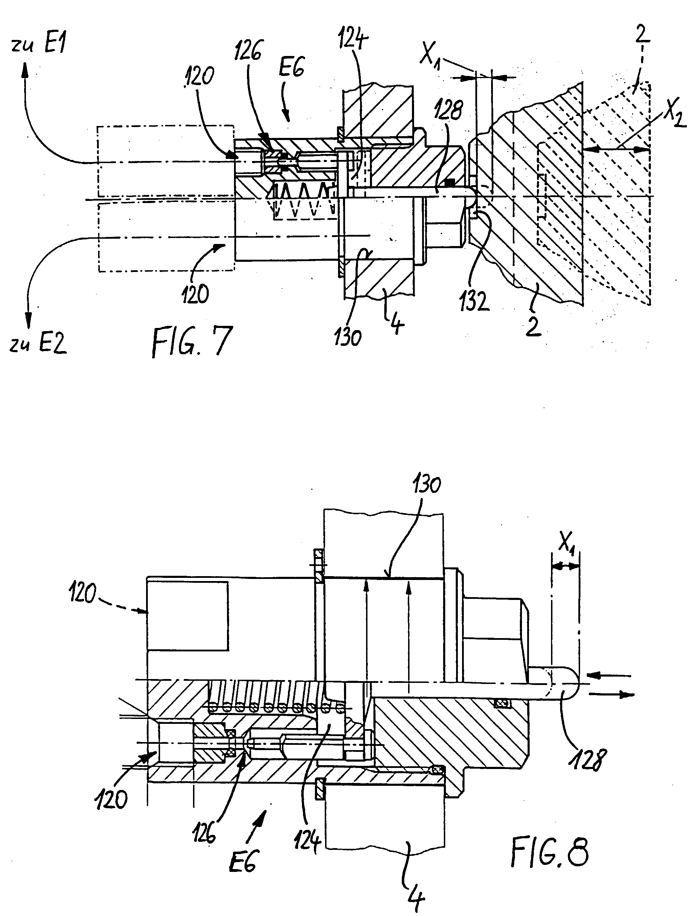

Wie sich nun insbesondere aus Fig. 1, 7 und 8 sowie 9 und 10 ergibt, besitzt das Druckausgleichsventil E6 für jedes der miteinander zum Druckausgleich zu verbindenden Kupplungsteile 12 einen Eingang 120, wobei jeder Eingang 120 über eine hydraulische Verbindung (in Fig. 1, 7 und 10 lediglich durch Pfeile "zu E1 ... E4" angedeutet) mit einem an dem jeweiligen Kupplungsteil 12 vorgesehenen Anschluß 122 (siehe Fig. 1) verbunden bzw. verbindbar ist. Innerhalb des Druckausgleichsventils E6 ist zwischen jedem Eingang 120 und einer für alle Eingänge 120 gemeinsamen Ventilkammer 124 ein insbesondere als Sitzventil ausgebildetes Absperrventil 126 angeordnet, wobei alle Absperrventile 126 über einen gemeinsamen Stößel 128 betätigbar sind. Hierzu ist das Druckausgleichsventil E6 derart in einer Aufnahmeöffnung 130 (vgl. auch Fig. 2) der nehmerseitigen Kupplungsplatte 4 angeordnet, daß der Stößel 128 in Richtung der geberseitigen Kupplungsplatte 2 weist und hierdurch beim Kuppeln von der geberseitigen Kupplungsplatte 2 betätigt wird. Gemäß Fig. 2 und 7 kann die geberseitige Kupplungsplatte 2 eine Aufnahmevertiefung 132 für das Ende des Stößels 128 aufweisen, so daß der Stößel 128 durch unmittelbare Anlage an der Platte 2 betätigt wird. In Fig. 7 und 8 sind der Schließhub der Ventile 126 mit X₁ und der Kuppelhub der Kupplungsplatten 2, 4 mit X₂ gekennzeichnet.

Bei der in Fig. 7 und 8 dargestellten Ausführungsform des Druckausgleichsventils E6 sind im entkuppelten Zustand die Kupplungsteile 12 ständig über die Absperrventile 126 und die Ventilkammer 124 miteinander verbunden, und nur im gekuppelten Zustand werden diese Verbindungen dann durch Schließen der Absperrventile 126 geschlossen.

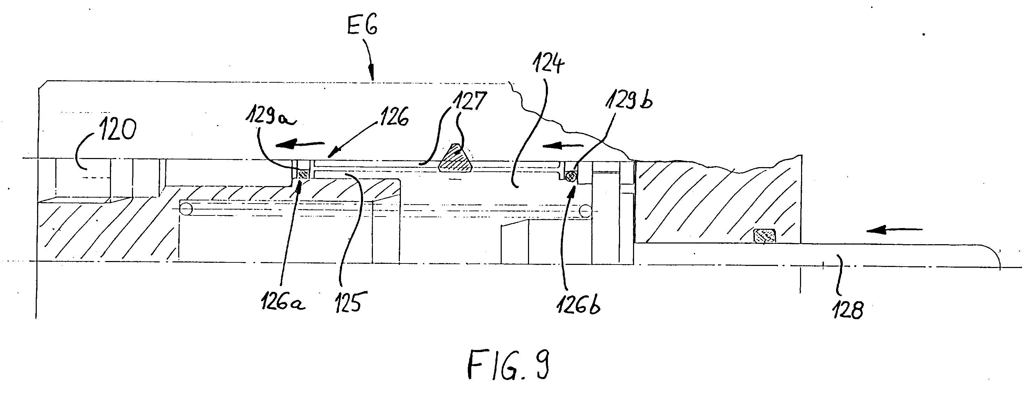

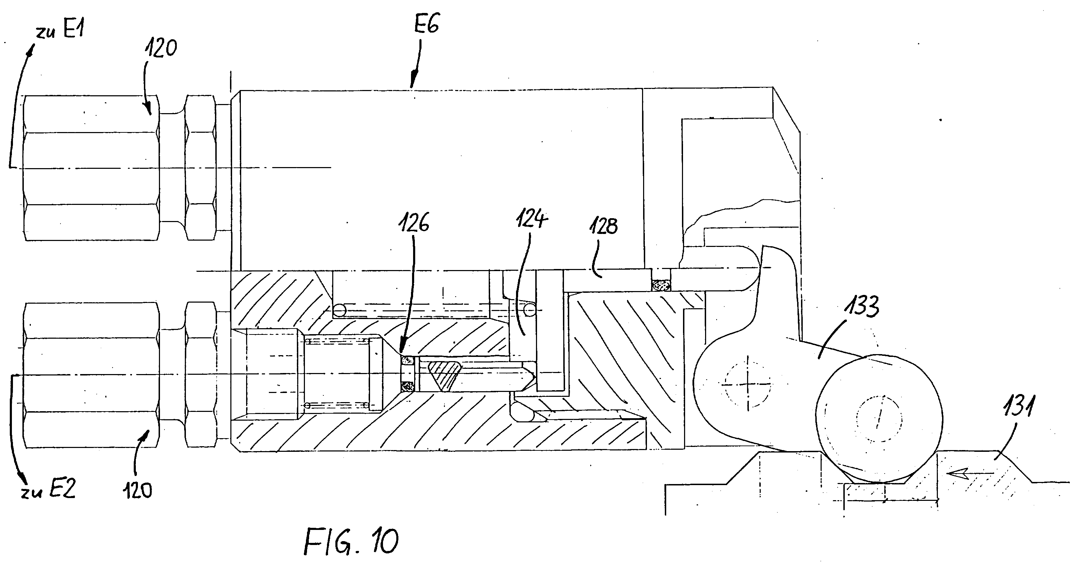

In den in Fig. 9 und 10 dargestellten Ausführungsformen sind jedoch die Kupplungsteile 12 sowohl im entkuppelten als auch im gekuppelten Zustand voneinander hydraulisch abgetrennt, und lediglich während des Kuppelvorganges wird über das Druckausgleichsventil kurzzeitig eine hydraulische Verbindung zwischen den Kupplungsteilen 12 zum Druckausgleich hergestellt. Diese Ausführungsformen eignen sich somit für solche Anwendungsfälle, bei denen ein verbraucherseitiges Aggregat auch noch im von der Geberseite abgekuppelten Zustand einen hydraulischen Restdruck benötigt, was beispielsweise bei einem Frontlader dann der Fall ist, wenn dieser in einem angehobenen Zustand verbleiben soll.

Bei der Ausführung nach Fig. 9 ist zu dem genannten Zweck vorgesehen, daß jedes zwischen dem jeweiligen Eingang 120 und der gemeinsamen Ventilkammer 124 angeordnete Absperrventil 126 als Doppelventil mit zwei Teilventilen 126a und 126b ausgebildet ist. Dabei ist jeder Eingang 120 mit der Ventilkammer 124 über einen im Querschnitt insbesondere kreisförmigen Kanal 125 verbunden, durch den sich ein Ventilstößel 127 mit insbesondere dreieckförmigem Querschnitt erstreckt, wobei der Ventilstößel 127 mit seinen vorzugsweise entsprechend dem kreisförmigen Querschnitt des Kanals 25 abgerundeten Dreieckkanten in dem Kanal 125 geführt ist. Durch den im wesentlichen dreieckförmigen Querschnitt des Ventilstößels 127 verbleiben in dem Kanal 125 Strömungspassagen für das Hydraulikmedium. Der Ventilstößel 127 trägt an seinem freien, dem gemeinsamen Stößel 128 abgekehrten Ende ein erstes Ventilelement 129a und an seinem mit dem gemeinsamen Stößel 128 über eine Verbindungsplatte verbundenen Ende ein zweites Ventilelement 129b. Dabei ist der Ventilstößel 127 jedenfalls länger als der Kanal 125. Durch diese Ausgestaltung wird erreicht, daß das Doppelventil im entkuppelten Zustand der Kupplungsteile in einer ersten Schließstellung steht, in der das erste Ventilelement - wie in Fig. 9 dargestellt - den Kanal 125 auf seiner dem Eingang 120 zugekehrten Seite verschließt. Beim Kuppeln wird dann das Ventil in Richtung der in Fig. 9 eingezeichneten Pfeile betätigt, so daß das erste Ventilelement den Bereich des Kanals 125 verläßt und dadurch alle Eingänge 120 über die Kanäle 125 und die Ventilkammer 124 verbunden werden (Druckausgleich). Das Ventil wird nun aber weiter in Pfeilrichtung betätigt, bis jeder Kanal 125 auf seiner der Ventilkammer 124 zugekehrten Seite durch das zweite Ventilelement 129b wieder verschlossen wird.

Bei der in Fig. 10 veranschaulichten Ausführungsform entspricht das Druckausgleichsventil E6 - was den grundsätzlichen Aufbau der Ventile 126 betrifft - im wesentlichen den Ausführungen nach Fig. 7 und 8. Dieses Druckausgleichsventil wird nun aber nicht durch direkte Anlage der Kupplungsplatte 2 an dem gemeinsamen Stößel 128 betätigt, sondern an der Kupplungsplatte 2 ist ein Nockenzapfen 131 angeordnet, der beim Kuppeln über einen zweiarmigen Schwenkhebel 133 das Ventil derart betätigt, daß die beschriebene "Zu-Auf-Zu-Funktion" gewährleistet ist. Dies läßt sich anhand der Fig. 10 ohne weitere Erläuterungen nachvollziehen.

In den dargestellten, bevorzugten Ausführungsformen sind die einzelnen Hydraulik-Kupplungen vorzugsweise ohne Verriegelungsmittel ausgebildet, wobei die Verriegelung der Kupplungsteile in der Kupplungslage über die Kupplungsplatten 2, 4 erfolgt. Hierzu sind die Kupplungsplatten 2, 4 mit einer mechanischen Betätigungs- und Sperrvorrichtung 134 ausgestattet (siehe Fig. 1 bis 3 sowie Fig. 11 bis 14).

Wie sich vor allem aus Fig. 2 ergibt, besteht diese Betätigungs- und Sperrvorrichtung 134 im Ausführungsbeispiel nach Fig. 1 bis 3 einerseits aus einem vorzugsweise an der nehmerseitigen Kupplungsplatte 4 befestigten, im wesentlichen zylindrischen, d.h. einen kreisförmigen Querschnitt aufweisenden Zug- und Führungsbolzen 136 sowie anderseits aus einem insbesondere an der geberseitigen Kupplungsplatte 2 angeordneten Betätigungsorgan 138. Hierbei handelt es sich um eine über einen Handhebel 140 drehbare Welle 142, die mit einem Exzenter 144 in eine seitlich am Umfang des Bolzens 136 gebildete Ausnehmung 146 eingreift, wobei der Bolzen 136 zur Führung und Zentrierung der Kupplungsplatten 2, 4 - und damit auch der Kupplungsteile aller daran gehalterten Kupplungen El bis E4 und gegebenenfalls E5 - in eine Führungsbohrung 148 insbesondere der geberseitigen Kupplungsplatte 2 eingreift. Durch Verschwenken des Hebels 140 kann so über den Bolzen 136 die nehmerseitige Kupplungsplatte 4 gegen die geberseitige Kupplungsplatte 2 gezogen und in dieser Kupplungslage arretiert werden. Hierbei kann eine derart hohe Kraft erzeugt werden, daß die Kupplungsteile der Hydraulik-Kupplungen ohne weiteres auch unter Druckbeaufschlagung gekuppelt werden können.

In Abweichung von der sich aus den Fig. 1 bis 3 ergebenden Ausführung kann die Betätigungs- und Sperrvorrichtung 134 mit Vorteil auch mindestens zwei parallele Zug- und Führungsbolzen 136 aufweisen, die in jeweils eine Führungsbohrung 148 der anderen Kupplungsplatte eingreifen und dort mit jeweils einem Betätigungsorgan 138 zusammenwirken, deren beiden Exzenter 144 dann zweckmäßigerweise gemeinsam von dem gleichen Hebel 140 betätigt werden. Eine Mehrfach-Kupplung mit einer derartigen Betätigungs- und Sperrvorrichtung ist zum Beispiel in der DE-C-2 146 097 beschrieben.

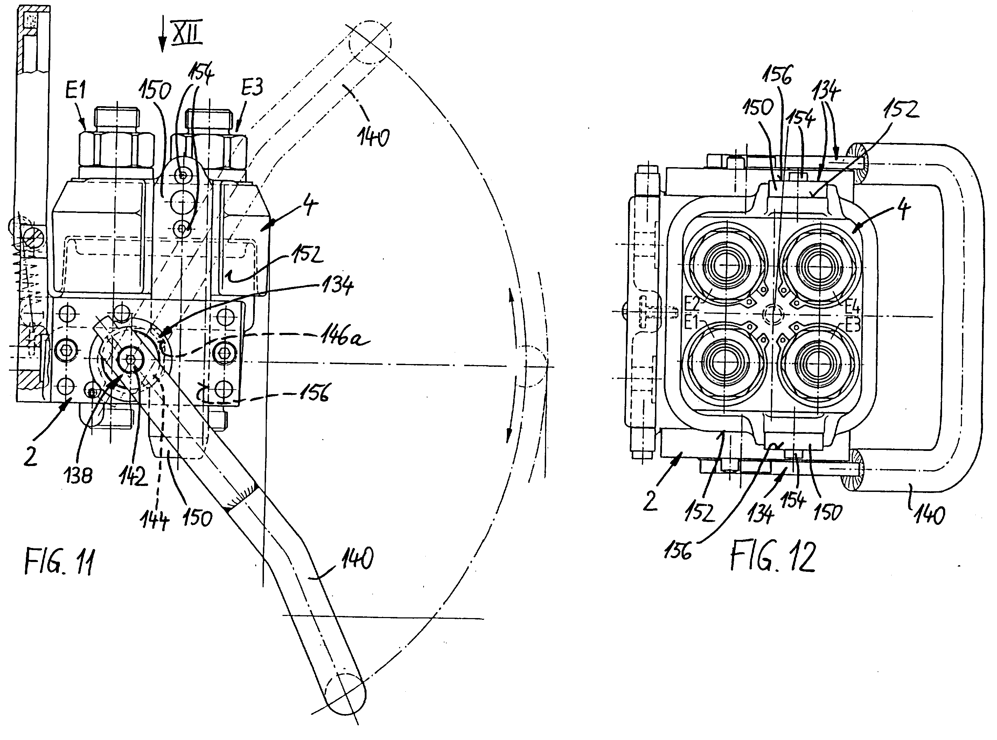

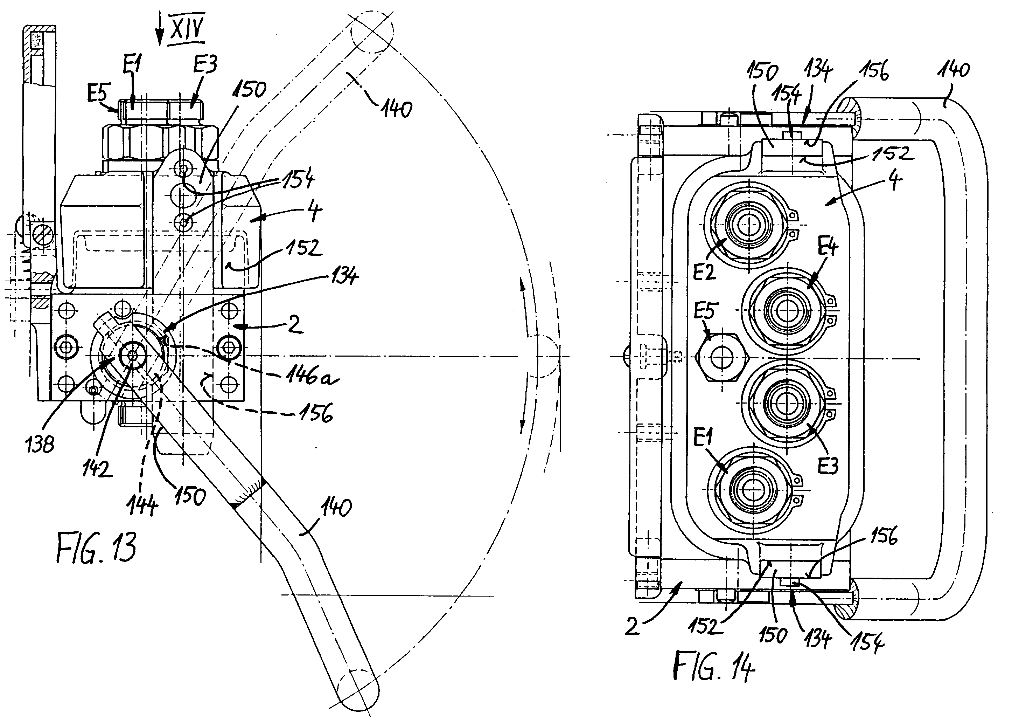

Es soll nun eine neuartige und besonders vorteilhafte Ausführungsform der Betätigungs- und Sperrvorrichtung 134 anhand der Fig. 11 und 12 einerseits und der Fig. 13 und 14 andererseits erläutert werden. Hierbei besitzt die Betätigungs- und Sperrvorrichtung 134 zur Vorzentrierung und Verriegelung der Kupplungsplatten 2, 4 - anstatt von zylindrischen Führungsbolzen 136 - vorzugsweise zwei parallele Führungsschwerter 150 mit jeweils langgestrecktem, insbesondere etwa rechteckigem Querschnitt. Folglich sind diese Führungsschwerter 150 flach und streifenförmig - insbesondere aus Blechstreifenmaterial - ausgebildet. Jedes Führungsschwert 150 ist vorzugsweise an der nehmerseitigen Kupplungsplatte 4 befestigt, und zwar vorteilhafterweise seitlich mit einer Breitseitenfläche in Anlage an einer von zwei gegenüberliegenden Seitenflächen 152 dieser Kupplungsplatte 4 und insbesondere über Schraubverbindungen 154. Vorzugsweise sitzt jedes Führungsschwert 150 zur exakten Ausrichtung formschlüssig in einer seitlichen Aufnahme der Kupplungsplatte 4. Ferner greift jedes Führungsschwert 150 in einen im Querschnitt entsprechenden Führungskanal (sog. "Schwertkasten") 156 insbesondere der geberseitigen Kupplungsplatte 2 ein und wirkt dort mit dem Betätigungsorgan 138 zusammen. Hierzu weist jedes Führungsschwert 150 eine von einer seiner Schmalseiten ausgehende Ausnehmung 146a auf, die funktionell der Ausnehmung 146 der oben beschriebenen zylindrischen Führungsbolzen 136 entspricht. Insofern entspricht auch die Ausgestaltung des bzw. jedes Betätigungsorgans 138 der Ausführung nach Fig. 1 bis 3, so daß auf die obigen Erläuterungen verwiesen werden kann.

Der wesentliche Vorteil der neuen Ausführung nach Fig. 11 bis 14 besteht nun darin, daß durch die flache Querschnittsform der Führungsschwerter 150 die Mehrfach-Kupplung außerordentlich klein und kompakt ausgebildet sein kann, und zwar insbesondere hinsichtlich der erforderlichen Flächengröße der Kupplungsplatten 2, 4. Dies wird besonders deutlich durch einen Vergleich der Figur 1 einerseits mit den Figuren 12 und 14 andererseits, woraus sich ergibt, daß die notwendige Flächengröße vor allem der nehmerseitigen Kupplungsplatte 4 im wesentlichen nur noch bestimmt wird durch die daran zu befestigenden Kupplungsteile der Hydraulik-Kupplungen E1 bis E4 und gegebenenfalls des elektrischen Kupplungselementes E5 sowie des erfindungsgemäßen Druckausgleichsventils E6 (welches allerdings in den Fig. 11 bis 14 nicht dargestellt ist). Diese Ausführungsform eignet sich daher vor allem für solche Anwendungsfälle, bei denen - zum Beispiel in Fahrzeugen - nur ein begrenzter Einbauraum für die bestückten Kupplungsplatten 2, 4 zur Verfügung steht. Zusätzlich ist hierbei noch von Vorteil, daß diese Ausführungsform mit den flachen Führungsschwertern 150 auch in der Herstellung preiswerter als diejenige mit den zylindrischen Bolzen 136 ist. Zudem können nach wie vor im gekuppelten Zustand sehr hohe Kupplungskräfte von mindestens 10 t sicher beherrscht werden.

## Patentansprüche

1. Mehrfach-Kupplung mit mindestens zwei Hydraulik-Kupplungen (E1 bis E4), wobei jede Hydraulik-Kupplung aus einem geberseitigen Kupplungsteil (10) und einem nehmerseitigen Kupplungsteil (12) besteht, wobei die als Steckerventil (14) und Muffenventil (16) ausgebildeten, zum Kuppeln dichtend ineinandersteckbaren Kupplungsteile (10,12) in einem entkuppelten Zustand selbsttätig schließen und sich beim Kuppeln gegenseitig öffnen, wobei einerseits zur Abdichtung jedes Kupplungsteils (10,12) in seinem entkuppelten und geschlossenen Zustand sowie andererseits zur gegenseitigen Abdichtung der gekuppelten Kupplungsteile (10,12) Umfangsdichtungen (48,56,74) vorgesehen sind,
**dadurch gekennzeichnet**, daß zum Schutz der vorhandenen Umfangsdichtungen (47,56,74) vor druckdifferenzbedingten Strömungen des Hydraulikmediums ein zumindest die nehmerseitigen Kupplungsteile (12) in ihrem entkuppelten, geschlossenen Zustand oder zumindest kurzzeitig während des Kuppelns hydraulisch miteinander verbindendes und in ihrem gekuppelten Zustand voneinander trennendes Druckausgleichsventil (E6) vorgesehen ist.

2. Mehrfach-Kupplung nach Anspruch 1,
**dadurch gekennzeichnet**, daß die geberseitigen Kupplungsteile (10) in einer ersten Kupplungsplatte (2) und die nehmerseitigen Kupplungsteile (12) entsprechend gegenüberliegend in einer zweiten Kupplungsplatte (4) gehaltert sind, wobei die Kupplungsplatten (2, 4) zum paarweisen Kuppeln der Kupplungsteile (10, 12) vorzugsweise über eine mechanische Betätigungs- und Sperrvorrichtung (134) gegeneinander bewegbar und arretierbar sind.

3. Mehrfach-Kupplung nach Anspruch 2,
**dadurch gekennzeichnet**, daß das Druckausgleichsventil (E6) derart in der zweiten Kupplungsplatte (4) gehaltert ist, daß es beim Kuppeln direkt oder indirekt durch die erste Kupplungsplatte (2) betätigt wird.

4. Mehrfach-Kupplung nach einem oder mehreren der Ansprüche 1 bis 3,
**dadurch gekennzeichnet**, daß das Druckausgleichsventil (E6) für jedes Kupplungsteil (12) einen mit diesem über eine hydraulische Verbindung verbundenen Eingang (120) sowie für alle Eingänge (120) eine gemeinsame Ventilkammer (124) aufweist, wobei zwischen jedem Eingang (120) und der Ventilkammer (124) ein insbesondere als Sitzventil ausgebildetes Absperrventil (126) angeordnet ist und alle Absperrventile (126) vorzugsweise über einen gemeinsamen Stößel (128) betätigbar sind.

5. Mehrfach-Kupplung nach einem oder mehreren der Ansprüche 2 bis 4,
**dadurch gekennzeichnet**, daß die Betätigungs- und Sperrvorrichtung (134) mindestens ein, vorzugsweise zwei an einer der Kupplungsplatten (4; 2) befestigte Führungsschwerter (150) mit jeweils länglichem, insbesondere etwa rechteckigem Querschnitt aufweist, wobei jedes Führungsschwert (150) in einen im Querschnitt entsprechenden Führungskanal (156) der anderen Kupplungsplatte (2; 4) eingreift und dort mit einem Betätigungsorgan (138) zusammenwirkt.

6. Mehrfach-Kupplung nach Anspruch 5,
**dadurch gekennzeichnet**, daß jedes Betätigungsorgan (138) einen über eine Welle (142) und insbesondere mittels eines Handhebels (140) betätigbaren Exzenter (144) aufweist, der zur Relativbewegung und Arretierung der Kupplungsplatten (2; 4) in eine von einer Schmalseite ausgehende Ausnehmung (146a) des Führungsschwertes (150) eingreift.

7. Mehrfach-Kupplung nach einem oder mehreren der Ansprüche 1 bis 6,
**dadurch gekennzeichnet**, daß die vorhandenen Dichtungen (48,56,74) der Hydraulik-Kupplungen (E1 bis E4) zusätzlich durch mechanische Mittel vor druckdifferenzbedingten Strömungen geschützt werden.

8. Mehrfach-Kupplung nach einem oder mehreren der Ansprüche 1 bis 7,
**dadurch gekennzeichnet**, daß die als elastische Dichtringe ausgebildeten und in umfänglichen, inneren bzw. äußeren Ringnuten (50,58,80) sitzenden Umfangsdichtungen (48,56,74) in jedem Zustand der Kupplungsteile (10,12), und zwar im entkuppelten und gekuppelten Zustand sowie auch während des Kuppelns, jeweils von der offenen Seite der jeweiligen Ringnut (50,58,80) her abgedeckt und so gekammert sind.

9. Mehrfach-Kupplung nach einem oder mehreren der Ansprüche 1 bis 8,
**dadurch gekennzeichnet**, daß die insbesondere nehmerseitig angeordnete Muffenventil (16) aus einem Muffengehäuse (18) und einem in diesem ortsfest abgestützten und sich derart axial und zentrisch in Richtung einer Gehäuseöffnung (20) erstrekkenden Stößel (22) besteht, daß zwischen dem Muffengehäuse (18) und einem Kopf (24) des Stößels (22) eine ringförmige Einstecköffnung (26) für einen hohlzylindrischen Steckerschaft (28) des Steckerventils (14) gebildet ist, wobei in dem Muffengehäuse (18) einerseits eine axialverschiebbare, federbelastete Zwischenhülse (30) und andererseits eine axialverschiebbare, federbelastete Innenhülse (32) derart angeordnet sind, daß die Zwischenhülse (30) im entkuppelten Zustand mit einem Ringabschnitt (34) zwischen dem Stößel-Kopf (24) und der Öffnung (20) des Muffengehäuses (18) die Einstecköffnung (26) im wesentlichen verschließend angeordnet ist und beim Kuppeln durch Einstecken des Steckerschaftes (28) so verschoben wird, daß unter Mitnahme der Innenhülse (32) ein ringförmiger Strömungsdurchlaß (36) geöffnet wird.

10. Mehrfach-Kupplung nach Anspruch 9,
**dadurch gekennzeichnet**, daß die die Zwischenhülse (30) mit einer vorderen Stirnringfläche (38) im entkuppelten Zustand zumindest annähernd in einer Ebene mit einer vorderen Stirnfläche (40) des Stößels (22) liegt, wobei die Stößel-Stirnfläche (40) ihrerseits vorzugsweise etwa in einer Ebene mit einer vorderen Stirnringfläche (42) des Muffengehäuses (18) liegt.

11. Mehrfach-Kupplung nach Anspruch 9 oder 10,
**dadurch gekennzeichnet**, daß das Muffenventil (16) eine erste Umfangsdichtung (48) in einer im Bereich der Einstecköffnung (26) angeordneten Innenringnut (50) des Muffengehäuses (18) aufweist, wobei diese erste Umfangsdichtung (48) im entkuppelten Zustand von einer zylindrischen Außenfläche (52) des Ringabschnittes (34) der Zwischenhülse (30) und im gekuppelten Zustand von einer zylindrischen Außenfläche (54) des Steckerschaftes (28) abgedeckt ist.

12. Mehrfach-Kupplung nach einem oder mehreren der Ansprüche 9 bis 11,
**dadurch gekennzeichnet**, daß das Muffenventil (16) eine zweite Umfangsdichtung (56) in einer Innenringnut (58) des Ringabschnittes (34) der Zwischenhülse (30) aufweist, wobei diese zweite Umfangsdichtung (56) im entkuppelten Zustand von einer zylindrischen Außenfläche (60) des Stößel-Kopfes (24) und im gekuppelten Zustand von einer zylindrischen Außenfläche (62) eines ringförmigen Abdeckabschnittes (64) der Innenhülse (32) abgedeckt ist.

13. Mehrfach-Kupplung nach einem oder mehreren der Ansprüche 9 bis 12,
**dadurch gekennzeichnet**, daß das Muffengehäuse (18) im Anschluß an die Einstecköffnung (26) eine durchmessererweiterte Innenkammer (100) aufweist, wobei die Zwischenhülse (30) über einen insbesondere etwa konisch verlaufenden Übergangsabschnitt (102) in einen durchmessererweiterten, in der Innenkammer (100) geführten Führungsabschnitt (104) übergeht, wobei die Innenhülse (32) mit einem Führungbereich (106) innerhalb des Führungsabschnittes (104) der Zwischenhülse (30) geführt ist.

14. Mehrfach-Kupplung nach einem oder mehreren der An sprüche 9 bis 13,
**dadurch gekennzeichnet**, daß die Zwischenhülse (30) druckausgeglichen ist, wozu insbesondere eine zwischen der Zwischenhülse (30) und dem Muffengehäuse (18) gebildete Ringkammer (108) mit einer zwischen der Zwischenhülse (30) und der Innenhülse (32) gebildeten Ringkammer (110) vorzugsweise über mindestens eine im Bereich des Übergangsabschnittes (102) angeordnete Durchgangsöffnung (112) verbunden ist.

15. Mehrfach-Kupplung nach einem oder mehreren der Ansprüche 1 bis 14,
**dadurch gekennzeichnet**, daß das insbesondere geberseitig angeordnete Steckerventil (14) aus einem Steckergehäuse (66) und einem in diesem axialbeweglich geführten, federbelasteten Ventilstößel (68) besteht, der im entkuppelten Zustand zum Schließen des Steckerventils (14) über eine Umfangsdichtung (74) gegen das Steckergehäuse (66) abgedichtet ist.

16. Mehrfach-Kupplung nach Anspruch 15,
**dadurch gekennzeichnet**, daß der Ventilstößel (68) im entkuppelten, geschlossenen Zustand mit einer vorderen Stirnfläche (76) eines Ventilkopfes (72) zumindest annähernd in einer Ebene mit einer vorderen Stirnringfläche (78) am Steckerschaft (28) des Steckverventils (14) liegt.

17. Mehrfach-Kupplung nach Anspruch 15 oder 16,
**dadurch gekennzeichnet**, daß die Umfangsdichtung (74) des Steckerventils (14) in einer Außenringnut (80) des Ventilkopfes (72) angeordnet und im entkuppelten Zustand von einer zylindrischen Innenfläche (82) des Steckerschaftes (28) und im gekuppelten Zustand von einer zylindrischen Innenfläche (84) eines Abdeckbereiches (86) einer den Ventilstößel (68) umschließenden, axialbeweglich geführten Schutzhülse (88) abgedeckt ist.

18. Mehrfach-Kupplung nach einem oder mehreren der Ansprüche 15 bis 17,
**dadurch gekennzeichnet**, daß zwischen der Schutzhülse (88) und dem Steckergehäuse (66) eine erste Schließfeder (92) und zwischen dem Ventilkopf (72) und der Schutzhülse (88) eine zweite Schließfeder (94) angeordnet sind.

19. Mehrfach-Kupplung nach einem oder mehreren der Ansprüche 15 bis 18,
**dadurch gekennzeichnet**, daß die Schutzhülse (88) insbesondere durch mindestens eine radiale Öffnung (96) druckausgeglichen ist.

## Claims

1. Multiple coupling having at least two hydraulic couplings (E1 to E4), each hydraulic coupling comprising a transmitter-side coupling part (10) and a receiver-side coupling part (12), the coupling parts (10, 12), which are designed as a plug valve (14) and sleeve valve (16) and can be plugged into each other in a leaktight manner for the purpose of coupling, closing automatically in an uncoupled state and opening each other during coupling, and circumferential seals (48, 56, 74) being provided, on the one hand for sealing each coupling part in its uncoupled and coupled state and, on the other hand, for the mutual sealing of the coupled coupling parts (10, 12), characterized in that, in order to protect the existing circumferential seals (47, 56, 74) against flows of the hydraulic medium caused by pressure differences, provision is made for a pressure equalization valve (E6) which connects at least the receiver-side coupling parts (12) hydraulically to one another in their uncoupled, closed state or at least briefly during coupling, and isolates these parts from one another in their coupled state.

2. Multiple coupling according to Claim 1, characterized in that the transmitter-side coupling parts (10) are mounted in a first coupling plate (2), and the receiver-side coupling parts (12) are provided appropriately opposite to them in a second coupling plate (4), the coupling plates (2, 4) being able to be moved towards each other and locked, preferably via a mechanical actuating and blocking device (134), in order to couple the coupling parts (10, 12) in pairs.

3. Multiple coupling according to Claim 2, characterized in that the pressure equalization valve (E6) is mounted in the second coupling plate (4) in such a way that, during coupling, it is actuated, directly or indirectly, by the first coupling plate (2).

4. Multiple coupling according to one or more of Claims 1 to 3, characterized in that the pressure equalization valve (E6) has, for each coupling part (12), an input (120) that is connected to the said part via a hydraulic connection, as well as a common valve chamber (124) for all the inputs (120), a shut-off valve (126), which is designed in particular as a seat valve, being arranged between each input (120) and the valve chamber (124), and all the shuf-off valves (126) preferably being able to be actuated via a common plunger (128).

5. Multiple coupling according to one or more of Claims 2 to 4, characterized in that the actuating and blocking device (134) has at least one, preferably two, guide tongues (150) that is/are fastened to one of the coupling plates (4; 2), and each has an elongated, in particular approximately rectangular, cross section, each guide tongue (150) engaging in a guide channel (156) of appropriate cross section on the other coupling plate (2; 4) and cooperating there with an actuating member (138).

6. Multiple coupling according to Claim 5, characterized in that each actuating member (138) has an eccentric (144) that can be actuated via a shaft (142) and in particular by means of a hand lever (140) and, for the relative movement and locking of the coupling plates (2; 4), engages in a cutout (146a) originating from a narrow side of the guide tongue (150).

7. Multiple coupling according to one or more of Claims 1 to 6, characterized in that the existing seals (48, 56, 74) of the hydraulic couplings (E1 to E4) are additionally protected by mechanical means against flows caused by pressure differences.

8. Multiple coupling according to one or more of Claims 1 to 7, characterized in that the circumferential seals (48, 56, 74), which are designed as elastic sealing rings and are seated in circumferential, internal and external annular grooves (50, 58, 80), are in each case covered and thus enclosed by the open side of the respective annular groove (50, 58, 80) in any state of the coupling parts (10, 12), specifically in the uncoupled and coupled state and also during coupling.

9. Multiple coupling according to one or more of Claims 1 to 8, characterized in that the sleeve valve (16), arranged in particular on the receiver side, comprises a sleeve housing (18) and a plunger (22) which is supported in a fixed location in the said housing and extends axially and centrally in the direction of a housing opening (20) in such a way that an annular plug-in opening (26) for a hollow cylindrical plug stem (28) of the plug valve (14) is formed between the sleeve housing (18) and a head (24) of the plunger (22), there being arranged in the sleeve housing (18), on the one hand, an axially displaceable, spring loaded intermediate sleeve (30) and, on the other hand, an axially displaceable, spring loaded inner sleeve (32), these being arranged such that, in the uncoupled state, the intermediate sleeve (30) is arranged with an annular section (34), between the plunger head (24) and the opening (20) in the sleeve housing (18), essentially closing the plug-in opening (26) and, during coupling, as a result of pushing in the plug stem (28), the intermediate sleeve (30) is displaced, taking the inner sleeve (32) with it, in such a way that an annular flow passage (36) is opened.

10. Multiple coupling according to Claim 9, characterized in that, in the uncoupled state, the intermediate sleeve (30) is located with a front end annular face (38) at least approximately in a plane with a front end face (40) of the plunger (22), the plunger end face (40), for its part, preferably being located approximately in a plane with a front end annular tace (42) of the sleeve housing (18).

11. Multiple coupling according to Claim 9 or 10, characterized in that the sleeve valve (16) has a first circumferential seal (48) in an internal annular groove (50) that is arranged in the sleeve housing (18) in the region of the plug-in opening (26) , this first circumferential seal (48), in the uncoupled state, being covered by a cylindrical outer surface (52) of the annular section (34) of the intermediate sleeve (30) and, in the coupled state, being covered by a cylindrical outer surface (54) of the plug stem (28).

12. Multiple coupling according to one or more of Claims 9 to 11, characterized in that the sleeve valve (16) has a second circumferential seal (56) in an internal annular groove (58) in the annular section (34) of the intermediate sleeve (30), this second circumferential seal (56), in the uncoupled state, being covered by a cylindrical outer surface (60) of the plunger head (24) and, in the coupled state, being covered by a cylindrical outer surface (62) of an annular covering section (64) of the inner sleeve (32).

13. Multiple coupling according to one or more of Claims 9 to 12, characterised in that, adjacent to the plug-in opening (26), the sleeve housing (18) has an inner chamber (100) of enlarged diameter, the intermediate sleeve (30) merging, via a transition section (102) that extends, in particular, approximately conically, into a guide section (104) of enlarged diameter that is guided in the inner chamber (100), the inner sleeve (32) being guided inside the guide section (104) of the intermediate sleeve (30) by way of a guide region (106).

14. Multiple coupling according to one or more of Claims 9 to 13, characterized in that the intermediate sleeve (30) is pressure-equalized, to which end, in particular, an annular chamber (108) formed between the intermediate sleeve (30) and the sleeve housing (18) is connected to an annular chamber (110) formed between the intermediate sleeve (30) and the inner sleeve (32), the connection preferably being via a passage opening (112) arranged in the region of the transition section (102).

15. Multiple coupling according to one or more or Claims 1 to 14, characterized in that the plug valve (14), arranged in particular on the transmitter side, comprises a plug housing (66) and a valve plunger (68) which is axially movably guided in the said housing, is spring-loaded and, in the uncoupled state, is sealed off from the plug housing (66) via a circumferential seal (74) in order to close the plug valve (14).

16. Multiple coupling according to Claim 15, characterized in that, in the uncoupled, closed state, the valve plunger (68) is located with a front end face (76) of a valve head (72) at least approximately in a plane with a front end annular face (78) on the plug stem (28) of the plug valve (14).

17. Multiple coupling according to Claim 15 or 16, characterized in that the circumferential seal (74) of the plug valve (14) is arranged in an external annular groove (80) in the valve head (72) and, in the uncoupled state, is covered by a cylindrical inner surface (82) of the plug stem (28) and, in the coupled state, is covered by a cylindrical inner surface (84) of a covering region (86) of a protective sleeve (88) that encloses the valve plunger (68) and is axially movably guided.

18. Multiple coupling according to one or more of Claims 15 to 17, characterized in that a first closing opring (92) is arranged between the protective sleeve (88) and the plug housing (66), and a second closing spring (94) is arranged between the valve head (72) and the protective sleeve (88).

19. Multiple coupling according to one or more of Claims 15 to 18, characterized in that the protective sleeve (88) is pressure-equalized, in particular by at least one radial opening (96).

## Revendications

1. Connecteur multiple comprenant au moins deux dispositifs d'accouplement hydraulique (E1 à E4), chaque dispositif d'accouplement comportant une portion d'accouplement mâle (10), et une portion d'accouplement femelle (12), les portions d'accouplement (10, 12), qui ont la forme d'une soupape à fiche (14) et d'un manchon à soupape (16) et peuvent être emboîtées l'une dans l'autre de manière étanche pour effectuer l'accouplement, se fermant automatiquement à l'état désaccouplé, et s'ouvrant mutuellement lors de l'accouplement, des joints d'étanchéité périphérique (48, 56, 74) étant prévus, d'une part pour l'étanchéité de chacune des portions d'accouplement (10, 12) à l'état désaccouplé et fermé, et, d'autre part, pour l'étanchéité des portions accouplées (10, 12) entre elles,
caractérisé en ce que, pour protéger les joints phériphériques prévus (48, 56, 74) contre des flux d'agent hydraulique provoqués par des différences de pression, on a prévu une soupape d'équilibrage de pression (E6) reliant au moins les portions d'accouplement femelles (12) hydrauliquement dans leur état désaccouplé et fermé, ou au moins brièvement au cours de l'accouplement, et les séparant à l'état accouplé.

2. Connecteur multiple selon la revendication 1,
caractérisé en ce que les portions d'accouplement mâles (10) sont maintenues dans une première plaque d'accouplement (2), et les portions d'accouplement femelles (12) sont maintenues respectivement en regard dans une deuxième plaque d'accouplement (4), les plaques d'accouplement (2, 4) étant de préférence mobiles et verrouillables l'une par rapport à l'autre, au moyen d'un dispositif mécanique d'actionnement et d'arrêt (134), en vue d'accoupler deux par deux les portions d'accouplement (10, 12).

3. Connecteur multiple selon la revendication 2,
caractérisé en ce que la soupape d'équilibrage de pression (E6) est maintenue dans la deuxième plaque d'accouplement (4) de manière à être actionnée directement ou indirectement par la première plaque d'accouplement (2) lors d'un accouplement.

4. Connecteur multiple selon l'une ou plusieurs des revendications 1 à 3,
caractérisé en ce que la soupape d'équilibrage de pression (E6) présente pour chaque portion d'accouplement (12) une entrée (120) reliée à celle-ci par une liaison hydraulique, ainsi que pour toutes les entrées (120), une chambre de soupape commune (124), une soupape d'arrêt (126), ayant en particulier la forme d'une soupape à siège, étant disposée entre chaque entrée (120) et la chambre de soupape (124), et toutes les soupapes d'arrêt (126) pouvant de préférence être actionnées par un poussoir commun (128).

5. Connecteur multiple selon l'une ou plusieurs des revendications 2 à 4,
caractérisé en ce que le dispositif d'actionnement et d'arrêt (134) présente au moins une, de préférence deux lames de guidage (150) à section transversale allongée, en particulier sensiblement rectangulaire, fixées à l'une des plaques d'accouplement (4, 2), chaque lame de guidage (150) s'engageant dans un canal de guidage (156) de section transversale correspondante de l'autre plaque d'accouplement (2, 4) et coopérant à cet endroit avec un élément d'actionnement (138).

6. Connecteur multiple selon la revendication 5,
caractérisé en ce que chaque élément d'actionnement (138) comporte un excentrique (144) pouvant être actionné par un axe (142), et en particulier au moyen d'un levier à main (140), cet excentrique s'insérant dans un évidement (146a) partant d'un petit côté pour provoquer un déplacement relatif et l'arrêt des plaques d'accouplement (2, 4).

7. Connecteur multiple selon l'une ou plusieurs des revendications 1 à 6,
caractérisé en ce que les joints prévus (48, 56, 74) des accouplements hydrauliques (E1 à E4) sont en outre protégés par des moyens mécaniques contre des flux dûs à des différences de pression.

8. Connecteur multiple selon l'une ou plusieurs des revendications 1 à 7,
caractérisé en ce que, dans chaque état des portions d'accouplement (10, 12), à savoir à l'état désaccouplé et à l'état accouplé, mais aussi en cours d'accouplement, les joints périphériques (48, 56, 74) qui ont la forme de bagues d'étanchéité élastiques disposées dans des rainures annulaires périphériques internes ou externes (50, 58, 80), sont respectivement couverts du côté ouvert de la rainure annulaire respective (50, 58, 80), et ainsi enfermés dans une chambre.

9. Connecteur multiple selon l'une ou plusieurs des revendications 1 à 8,
caractérisé en ce que la soupape à manchon (16) disposée en particulier côté femelle comporte un boîtier (18), et un poussoir (22) maintenu de manière stationnaire dans celui-ci et s'étendant axialement et centralement dans la direction d'une ouverture de boîtier (20), en ce que, entre le boîtier de manchon (18) et la tête (24) du poussoir (22), est formée une ouverture d'introduction annulaire (26) pour une tige (28) en forme de cylindre creux de la soupape de connecteur (14), une douille intermédiaire (30), mobile axialement et soumise à l'action d'un ressort d'une part, et d'autre part, une douille interne (32), mobile axialement et soumise à l'action d'un ressort étant disposées dans le boîtier de manchon (18), de manière à ce que la douille intermédiaire (30) à l'état désaccouplé soit disposée avec un segment annulaire (34) entre la tête de poussoir (24) et l'ouverture (20) du boîtier de manchon (18) en fermant sensiblement l'ouverture d'introduction (26), et que, lors de l'accouplement, cette douille intermédiaire soit déplacée par l'introduction de la tige de connecteur (28), en entraînant la douille interne (32), de manière à créer une ouverture (36) d'admission d'un flux.

10. Connecteur multiple selon la revendication 9,
caractérisé en ce que, à l'état désaccouplé, une surface annulaire antérieure (38) de la douille intermédiaire (30) est située, au moins sensiblement, dans le même plan qu'une surface antérieure (40) du poussoir (22), la surface frontale (40) du poussoir étant à son tour située de préférence sensiblement dans le même plan qu'une surface antérieure (42) du boîtier de manchon (18).

11. Connecteur multiple selon la revendication 9 ou 10,
caractérisé en ce que la soupape à manchon (16) présente un premier joint périphérique (48) dans une rainure interne (50) du boîtier (18) située dans la région de l'ouverture d'introduction (26), ce premier joint périphérique (48) étant couvert à l'état désaccouplé par une surface externe cylindrique (52) du segment annulaire (34) de la douille intermédiaire (30), et à l'état accouplé, par une surface externe cylindrique (54) de la tige de connecteur (28).

12. Connecteur multiple selon l'une ou plusieurs des revendications 9 à 11,
caractérisé en ce que la soupape à manchon (16) présente un deuxième joint périphérique (56) dans une rainure interne (58) du segment annulaire (34) de la douille intermédiaire (30), ce deuxième joint périphérique (56) étant couvert à l'état désaccouplé par une surface externe cylindrique (60) de la tête de poussoir (24), et à l'état accouplé, par une surface externe cylindrique (62) d'une portion de recouvrement annulaire (64) de la douille interne (32).

13. Connecteur multiple selon l'une ou plusieurs des revendications 9 à 12,
caractérisé en ce que le boîtier de manchon (18) présente dans le prolongement de l'ouverture d'introduction (26) une chambre interne (100) à diamètre élargi, la douille intermédiare (30) étant prolongée, en passant par une section de transition (102) en particulier sensiblement conique, par une portion de guidage (104) à diamètre élargi guidée dans la chambre interne (100), la douille interne (32) étant guidée par une région de guidage (106), à l'intérieur de la portion de guidage (104) de la douille intermédiaire (30).

14. Connecteur multiple selon l'une ou plusieurs des revendications 9 à 13,
caractérisé en ce que la douille intermédiaire (30) est en équilibre de pression, une chambre annulaire (108), formée entre la douille intermédiaire (30) et le boîtier de manchon (18), étant à cet effet reliée en particulier à une chambre annulaire (110) formée entre la douille intermédiaire (30) et la douille interne (32), de préférence par au moins une ouverture de passage (112) située dans la région de la section de transition (102).

15. Connecteur multiple selon l'une ou plusieurs des revendications 1 à 14,
caractérisé en ce que la soupape de connecteur (14) disposée en particulier côté femelle comporte un boîtier (66), et un poussoir à soupape (68) guidé de manière axialement mobile dans celui-ci, et soumis à l'action d'un ressort, ce poussoir étant rendu étanche à l'état désaccouplé par rapport au boîtier (66) par un joint périphérique (74) pour fermer la soupape de connecteur (14).

16. Connecteur multiple selon la revendication 15,
caractérisé en ce que, à l'état déaccouplé et fermé, une face antérieure (76) de la tête (72) du poussoir à soupape (68) est située au moins approximativement dans le même plan qu'une surface antérieure (78) de la tige (28) de la soupape de connecteur (14).

17. Connecteur multiple selon la revendication 15 ou 16,
caractérisé en ce que le joint périphérique (74) de la soupape de connecteur (14) est disposé dans une rainure annulaire externe (80) de la tête de soupape (72), couvert à l'état désaccouplé par une surface interne cylindrique (82) de la tige de connecteur mâle (28), et à l'état accouplé, par une surface interne cylindrique (84) d'une région de recouvrement (86) d'une douille de protection (88) entourant le poussoir à soupape (68), et guidée de manière axialement mobile.

18. Connecteur multiple selon l'une ou plusieurs des revendications 15 à 17,
caractérisé en ce qu'un premier ressort de fermeture (92) est agencé entre la douille de protection (88) et le boîtier de connecteur (66), et qu'un deuxième ressort de fermeture (94) est agencé entre la tête de soupape (72) et la douille de protection (88).

19. Connecteur multiple selon l'une ou plusieurs des revendications 15 à 18,
caractérisé en ce que la douille de protection (88) est en équilibre de pression, en particulier grâce à au moins une ouverture radiale (96).
